Europäisches Patentamt

European Patent Office

Office européen des brevets

(11) Veröffentlichungsnummer: **0 284 711 B1**

# EUROPÄISCHE PATENTSCHRIFT

(45) Veröffentlichungstag der Patentschrift: **04.08.93**

(51) Int. Cl.⁵: **G01K 7/20**, G01K 13/08, G01R 31/34

(21) Anmeldenummer: **88100156.4**

(22) Anmeldetag: **08.01.88**

(54) **Einrichtung zum Erfassen der Wicklungstemperatur eines bürstenlosen Gleichstrommotors.**

(30) Priorität: **02.03.87 DE 3706659**

(43) Veröffentlichungstag der Anmeldung:
**05.10.88 Patentblatt 88/40**

(45) Bekanntmachung des Hinweises auf die
Patenterteilung:
**04.08.93 Patentblatt 93/31**

(84) Benannte Vertragsstaaten:
**CH DE FR GB LI**

(56) Entgegenhaltungen:

**IEEE TRANSACTIONS ON POWER APPARA-
TUS AND SYSTEMS, Band PAS-98, Nr. 4,
July/August 1979, Seiten 1238-1243, IEEE,
New York, US; S.C. GUPTA, M.L. DEWAL: "A
novel technique for the measurement of
average rotor temperature of brushless synchronous machines"**

**BROWN BOVERI REVIEW, Band 63, Nr. 8,
August 1976, Seiten 517-520, Baden, CH; P.
RADIC, H. STRUPP: "Measurement of temperature rise in induction motors using the
continuously varied frequency method"**

(73) Patentinhaber: **Heidelberger Druckmaschinen
Aktiengesellschaft
Kurfürsten-Anlage 52-60 Postfach 10 29 40
W-6900 Heidelberg 1(DE)**

(72) Erfinder: **Grützmacher, Bertold, Dr.
Eichenweg 10a
W-6905 Schriesheim(DE)**
Erfinder: **Eiswirth, Peter
Zentstrasse 7
W-6900 Heidelberg(DE)**
Erfinder: **Meyer, Helmut
Am Petrus 3
W-6915 Dossenheim(DE)**

(74) Vertreter: **Stoltenberg, Baldo Heinz-Herbert et
al
c/o Heidelberger Druckmaschinen AG
Kurfürsten-Anlage 52-60
W-6900 Heidelberg 1 (DE)**

**Beschreibung**

Die Erfindung betrifft eine Einrichtung zum Erfassen der Wicklungstemperatur eines bürstenlosen Gleichstrommotors durch Ermitteln des Ohm'schen Wicklungswiderstandes wenigstens einer Wicklung.

Es ist allgemein bekannt, daß bei Betrieb eines Gleichstrommotors im wesentlichen die Wicklung erwärmt wird und deshalb bei Vollastbetrieb oder unter extremen Einsatzbedingungen die Erwärmung der Wicklung besonders beachtet werden muß. Zu diesem Zweck sind verschiedene Temperaturmeßeinrichtungen bekannt geworden.

Eine Möglichkeit zur Bestimmung der Wicklungstemperatur besteht beispielsweise darin, einen Temperaturmeßfühler in der Wicklung vorzusehen und damit die Temperatur der Wicklung zu messen. Nachteilig bei dieser Einrichtung ist jedoch, daß die Temperatur nur an der Stelle gemessen werden kann, an der sich der Meßfühler befindet. Dies bedeutet, daß örtliche Temperaturüberhöhungen in anderen Bereichen der Wicklung, oder die (gesamte) mittlere Temperatur (Temperaturverteilung) in der Wicklung, nicht gemessen werden können.

Eine weitere Möglichkeit zur Messung der Wicklungstemperatur besteht darin, den Ohm'schen Widerstand der Wicklung zu messen und aus diesem gemessenen Widerstandswert und einem Vergleichswert, d.h. einem Widerstandswert der Wicklung bei kaltem Motor, die Temperaturerhöhung zu bestimmen. Dieses Verfahren läßt sich jedoch nur bei stillstehendem Motor anwenden und ist somit zur überwachung der Motortemperatur während des Betriebs des Motors ungeeignet.

In dem Zeitschriftenartikel "A Novel Technique for the Measurement of Average Rotor Temperature of Brushless Synchronous Machines" aus IEEE Transactions on Power Apparatus and Systems, Vol. PAS-98, No. 4 (1979-07/08) wird ein Verfahren zur Messung der Temperatur einer bürstenlosen Gleichstrommaschine beschrieben. Über einen hochohmigen Nebenschlußwiderstand wird der Strom in einer Phasenwicklung der Gleichstrommaschine in eine proportionale Gleichspannung umgewandelt. Über Spannungsfrequenzumsetzer werden diese Spannung und die an der Maschine anliegende Spannung in Frequenzen umgesetzt. Über eine Auswerteschaltung läßt sich aus dem Verhältnis der beiden Frequenzen eine Temperaturänderung des Motors feststellen.

Der Erfindung liegt deshalb die Aufgabe zugrunde, eine Einrichtung zum Erfassen der Wicklungstemperatur bei einem Motor zu schaffen, die die Temperatur der gesamten Wicklung bei beliebigen Betriebszuständen des Motors erfaßt.

Diese Aufgabe wird ausgehend von der Gattung des Anspruchs 1 gemäß dessen kennzeichnenden Merkmalen gelöst.

Ein wesentlicher Vorteil der Erfindung besteht darin, daß nunmehr ohne eine Unterbrechung des Motorbetriebs eine Temperaturmessung duchgeführt werden kann und zur Temperaturmessung innerhalb des Motors keine zusätzlichen Elemente wie Meßfühler o.ä. erforderlich sind.

Es ist außerdem von Vorteil, daß diese Art der Temperaturmessung einen geringen schaltungstechnischen Aufwand erfordert und außerdem auch nachträglich an jedem Motor einrichtbar ist. Die Einrichtung läßt sich bei den Motoren anwenden, bei denen die Wicklungen innerhalb bestimmter Zeitspannen stromlos sind. Dies sind insbesondere bürstenlose Gleichstrommotoren aber auch Schrittmotoren.

In einer Weiterbildung der Erfindung wird vorgeschlagen, zur Bestimmung der Zeitspanne, in welcher sich die Wicklung im stromlosen Zustand befindet, ein oder mehrere Signale der Kommutierungsschaltung des Motors auszuwerten. Dies erfolgt beispielsweise derart, daß das Kommutierungssignal, welches den Strom in einer Wicklung abschaltet, ein Startsignal für eine Messung bildet und das nächste Signal, das den Strom in dieser Wicklung wieder einschaltet, als Stoppsignal für die Messung dient.

In einer Ausgestaltung der Erfindung wird vorgeschlagen, die Motorwicklung als Teil eines Reihenschwingkreises zu benutzen und diesen Reihenschwingkreis beispielsweise mit einem Frequenzgenerator im Bereich der Resonanzfrequenz anzuregen, wobei der Maximalwert der Strom-Amplitude ein Maß für den ohm'schen Wicklungswiderstand darstellt. Für diese Messung ist es nicht erforderlich, die Resonanzfrequenz genau vorzubestimmen, da mittels des Frequenzgenerators die Möglichkeit besteht, ein Frequenzband zu durchfahren. Dieses Frequenzband ist so gewählt, daß sich die Resonanzfrequenz innerhalb desselben befindet. Der Reihenschwingkreis wird in einer vorteilhaften Ausgestaltung der Erfindung dadurch gebildet, daß zu dem ohm'schen Widerstand und der Induktivität der Wicklung wenigstens ein Kondensator in Reihe geschaltet wird. Mit diesem Kondensator besteht außerdem die Möglichkeit, in die Wicklung induzierte Spannungen während der Meßphase von der Meßschaltung zu entkoppeln.

Eine weitere Ausgestaltungsmöglichkeit der Erfindung besteht darin, ein Meßsignal in Form eines Spannungsimpulses zu erzeugen, welcher der Wicklung aufgeschaltet wird, um den daraus resultierenden Stromverlauf zu messen. Dieser Stromverlauf ist bei einer konstanten Induktivität der Spule abhängig von dem ohm'schen Widerstand der Wicklung und stellt damit ein Maß für die Veränderung des ohm'schen Widerstandes bzw. für die Veränderung der Temperatur dar.

Die Messung des ohm'schen Widerstandes der Wicklung wird gemäß einer Weiterbildung der Erfindung zuerst bei kaltem Motor, d.h. während oder kurz nach der Anlaufphase des Motors durchgeführt. Aufgrund dieser ersten Messung und den weiteren Messungen während der Erwärmung des Motors kann die Änderung des ohm'schen Widerstandes und damit die Temperauränderung, bezogen auf eine Ausgangstemperatur, ermittelt werden.

Die Erfindung wird nachfolgend anhand von Ausführungsbeispielen näher erläuert. Es zeigt:

Fig. 1a    den Verlauf der in eine Wicklung induzierten Spannung,

Fig. 1b    den Verlauf des Motorstroms,

Fig. 2    den schematischen Aufbau einer Meßschaltung,

Fig. 3    den Verlauf des Meßstroms im Resonanzfrequenzbereich,

Fig. 4    den schematischen Aufbau einer weiteren Meßschaltung,

Fig. 5    den Verlauf des Meßstroms, dem eine Sprungfunktion der Spannung zugrunde liegt.

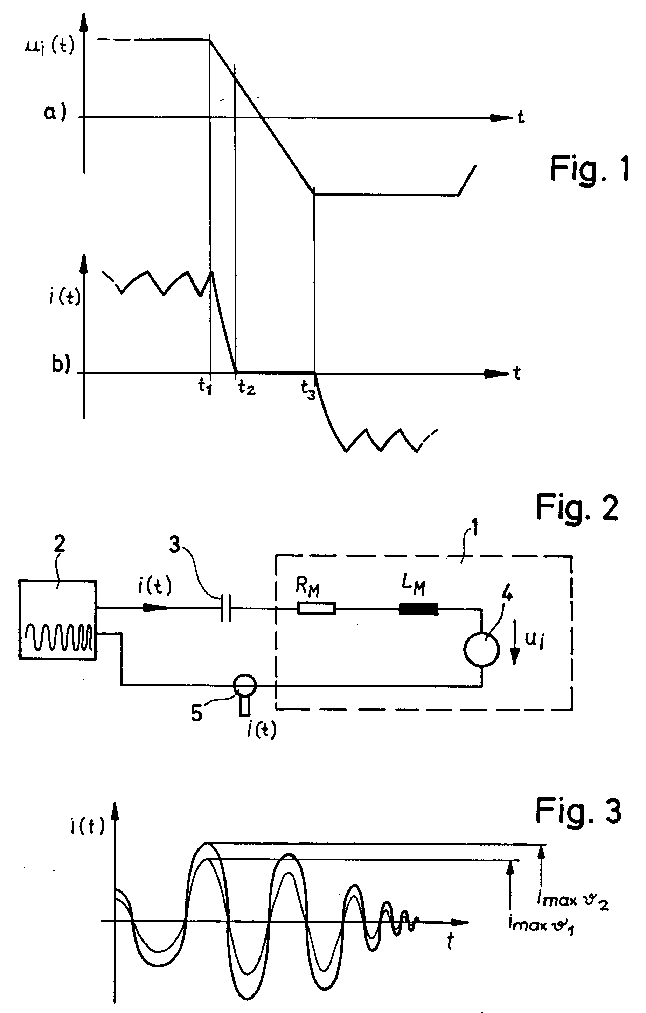

Bei einem bürstenlosen Gleichstrommotor wird in den Motorwicklungen eine annähernd trapezförmige Spannung induziert - der Verlauf dieser Spannung ist in Fig. 1a dargestellt. Der Einfachheit halber wurde lediglich der Verlauf der Spannung in einem Wicklungspaar gezeigt. Die in den weiteren Wicklungen eines Gleichstrommotors induzierten Spannungen entsprechen diesem Spannungsverlauf und sind lediglich phasenverschoben.

Der in den Wicklungen fließende Motorstrom ist in Fig. 1b gezeigt. Auch hier wurde lediglich der Strom in einem Wicklungspaar dargestellt, und zwar für das, in welchem die in Fig. 1a dargestellte Spannung induziert wird. Die Motorkommutierung schaltet den Erregerstrom zu den Zeitpunkten auf die Wicklungen, bei denen die induzierte Spannung auf einem konstanten Wert verläuft. Der sägezahnförmige Verlauf des Erregerstroms ist bedingt durch die Stromregelung und ist für die Wicklungstemperaturmessung ohne Bedeutung. Zum Zeitpunkt $t_1$ fällt die induzierte Spannung ab; gleichzeitig wird der Erregerstrom abgeschaltet und klingt bis zu einem Zeitpunkt $t_2$ durch die bekannte Anordnung von Freilaufdioden in der Ansteuerschaltung ab, so daß der Strom bis zum Zeitpunkt $t_3$ auf einem konstanten Null-Pegel verläuft. Zum Zeitpunkt $t_3$ hat die induzierte Spannung einen konstanten Wert mit negativem Vorzeichen erreicht - der Erregerstrom wird in umgekehrter Richtung ab diesem Zeitpunkt auf die Wicklung geschaltet. Bei bürstenlosen Gleichstrommotoren werden von drei vorhandenen Wicklungspaaren jeweils nur zwei gleichzeitig von Strom durchflossen. Während dieser Zeitspanne besteht an der nicht vom Strom durchflossenen Wicklung eine Induktionsspannung, die mit, während des kurzen Meßzeitraumes ungefähr konstanter drehzahlabhängiger Steigung von einem positiven zu einem ungefähr betragsgleichen negativen Wert abfällt oder umgekehrt.

Die stromlose Zeitspanne zwischen den Zeitpunkten $t_2$ und $t_3$ kann als Meßzeitspanne genutzt werden. Die Meßzeit beträgt bei einem Antriebsmotor mit einer Nenndrehzahl von 3000 1/min. ca. 1 ms.

Der ohm'sche Widerstand der Kupferwicklung ist von der Temperatur abhängig, und seine Erfassung kann somit zur Messung der Wicklungstemperatur dienen. Aufgrund der stromlosen Phasen ist es deshalb bei bürstenlosen Gleichstrommotoren möglich, mit Hilfe eines Stromes, der die Motorfunktion nicht nennenswert beeinflußt, den Wicklungswiderstand zu messen.

Eine Meßschaltung zur Messung der Wicklungstemperatur zeigt die Fig. 2. Diese Meßschaltung besteht aus einem Frequenzgenerator 2, dessen Signal über einen Kondensator 3 auf eine Wicklung des Motors geschaltet ist.

Der Motor ist schematisch als Block 1 angedeutet und enhält die Motorwicklung $L_M$, den Wicklungswiderstand $R_M$ und den als Induktionsspannungserzeuger dargestellten Rotor 4. In dem Meßkreis befindet sich eine Strommeßeinrichtung 5. Der Kapazitätswert des Kondensators 3 ist so bemessen, daß einesteils die Induktionsspannung $u_i$ nicht störend auf den Generator zurückwirkt und andererseits der aus Kondensator und Wicklungen gebildete Reihenschwingkreis einen Resonanzfrequenzwert aufweist, der im Frequenzbereich des Generators liegt.

Während der Meßzeitspanne wird die von dem Generator erzeugte Frequenz von einem Wert unterhalb der Resonanzfrequenz bis zu einem Wert oberhalb der Resonanzfrequenz oder umgekehrt verändert. Dadurch fließt ein Strom i(t), dessen Stärke bis zum Erreichen der Resonanzüberhöhung ansteigt und danach abfällt. Das Start-und Stoppsignal für den Generator 2 kann beispielsweise von der Kommutierungselektronik des Motors erzeugt werden.

Dieser Strom i(t) ist in Fig. 3 dargestellt. Der Maximalwert dieses Stromes $i_{max}$ ist ein Maß für den ohm'schen Widerstand $R_M$ und damit für die Wicklungstemperatur $\vartheta$. Wird eine erste Messung dieses Stromes bei kaltem Motor ($i_{max}\vartheta_1$) und eine zweite Messung bei warmem Motor ($i_{max}\vartheta_2$) durchgeführt, dann kann aus der Änderung des Maximalwertes des Stroms ($i_{max}$) die Widerstandsänderung der Wicklung und damit die Temperaturänderung der Wicklung, bezogen auf eine Ausgangstemperatur, bestimmt werden.

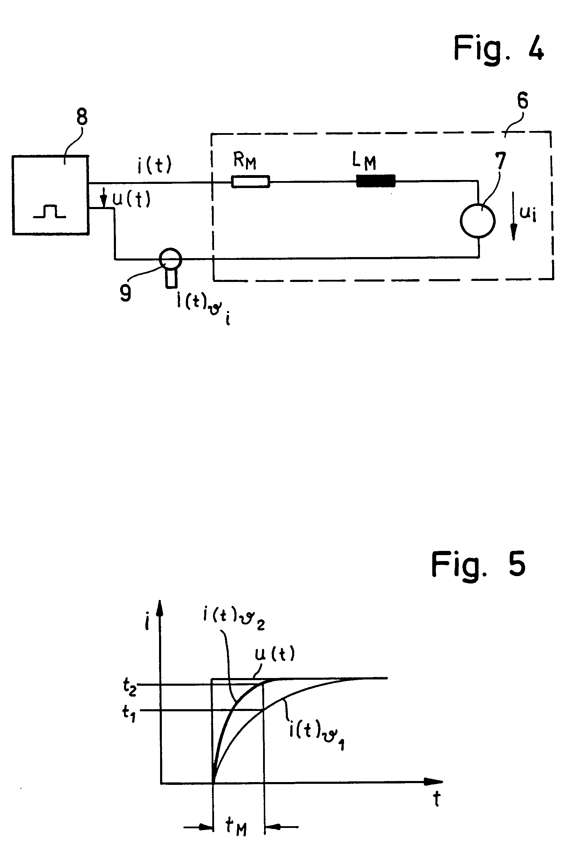

In Fig 4 ist eine weitere Meßeinrichtung dargestellt. Innerhalb des Blocks 6 befinden sich die Komponenten des Motors wie Motorwicklung $L_M$, Wicklungswiderstand $R_M$ und Induktionsspannungserzeuger 7. Mit der Wicklung verbunden ist ein Impulserzeuger 8, der rechteckförmige Spannungsimpulse erzeugt.

In Fig. 5 ist der Verlauf der von dem Impulsezeuger 8 erzeugten Spannung u(t) mit ihrer Aufflanke dargestellt. Der aufgrund dieser Spannung erzeugte Strom ist bei unterschiedlichen Wicklungstemperaturen $\vartheta_1$, $\vartheta_2$ dargestellt und hat bei $\vartheta_1$ den Verlauf i(t) $\vartheta_1$ und bei der Temperatur $\vartheta_2$ den Verlauf i(t) $\vartheta_2$. Da i(t) nach einer e-Funktion mit der Zeitkonstanten $T = L_M/R_M$ ansteigt, ist die Anstiegszeit des Stroms ein Maß für den Wert des Wicklungswiderstandes. Nach einer bestimmten Meßzeit $t_m$ wird die Größe des Stroms gemessen und ergibt somit direkt ein Maß für die Temperatur bzw. für die Temperaturänderung der Wicklung. Der Verlauf des Stroms i(t) $\vartheta_1$ wurde beispielsweise bei kaltem Motor, der Verlauf des Stroms i(t) $\vartheta_2$ wurde beispielsweise bei warmem Motor festgestellt. Aus den unterschiedlichen Größen des Stroms nach der Meßzeit $t_m$ läßt sich somit in einfacher Weise die Temperaturänderung feststellen.

Der Einfluß der Induktionsspannung $u_i$, die sich ja während der Meßzeitspanne $t_2$ bis $t_3$ (Fig. 1) ändert, kann z.B. dadurch eliminiert werden, daß der gesamte Meßvorgang sehr kurz gehalten wird und zeitlich symmetrisch zum Nulldurchgang der induzierten Spannung $u_i$ gelegt wird.

Eine weitere Möglichkeit zur Messung der Temperaturänderung mit einem Impulserzeuger besteht darin, daß die Meßspannung u(t) in Abhängigkeit von einer oberen Stromgrenze i(t) ausgeschaltet und bei Erreichen einer unteren Stromgrenze i(t) eingeschaltet wird, so daß sich eine Schaltfrequenz einstellt, die von dem Widerstand $R_M$ abhängig ist und damit ebenfalls als Maß für die Widerstandsänderung bzw. für die Temperaturänderung in der Wicklung benutzt werden kann.

**TEILELISTE**

| | |
|---|---|
| 1 | Block |
| 2 | Frequenzgenerator |
| 3 | Kondensator |
| 4 | Induktionsspannungserzeuger |
| 5 | Strommeßeinrichtung |
| 6 | Block |
| 7 | Induktionsspannungserzeuger |
| 8 | Impulserzeuger |
| 9 | Strommeßeinrichtung |

**Patentansprüche**

1. Einrichtung zum Erfassen der Wicklungstemperatur eines bürstenlosen Gleichstrommotors durch Ermitteln des Ohm'schen Wicklungswiderstandes wenigstens einer Wicklung, **dadurch gekennzeichnet,** daß eine Meßschaltung vorgesehen ist, die bei laufendem Motor den Ohm'schen Wicklungswiderstand während einer Zeitspanne, in welcher sich die Wicklung in stromlosem Zustand befindet, ermittelt.

2. Einrichtung nach Anspruch 1, **dadurch gekennzeichnet,** daß eine Kommutierungselektronik des Motors vorgesehen ist, die der Meßschaltung ein Signal zur Bestimmung der Zeitspanne, in welcher die Messung durchgeführt wird, liefert.

3. Einrichtung nach Anspruch 1 oder 2, **dadurch gekennzeichnet,** daß die Meßschaltung zur Bestimmung des Ohm'schen Wicklungswiderstandes aus einem Reihenschwingkreis besteht und daß der Maximalwert der Stromamplitude bei einer angeregten Resonanzfrequenz ein Maß für den Ohm'schen Widerstand der Wicklung darstellt.

4. Einrichtung nach Anspruch 3, **dadurch gekennzeichnet,** daß zur Erzeugung der Resonanzfrequenz ein Frequenzgenerator (2) vorgesehen ist, der während der Zeitspanne, in der die Wicklung stromlos ist, einen Frequenzbereich, innerhalb dessen die Resonanzfrequenz liegt, durchläuft.

5. Einrichtung nach Anspruch 3 oder 4, **dadurch gekennzeichnet,** daß wenigstens ein Kondensator (3) zur Bildung des Reihenschwingkreises vorgesehen ist.

6. Einrichtung nach Anspruch 1 oder 2, **dadurch gekennzeichnet,** daß als Meßschaltung ein Impulserzeuger (8) vorgesehen ist, welcher die Wicklung mit wenigstens einem Spannungsimpuls beaufschlagt, wobei der resultierende Stromverlauf ein Maß für den Ohm'schen Widerstand der Wicklung darstellt.

7. Einrichtung nach Anspruch 1 oder 2, **dadurch gekennzeichnet,** daß die Meßschaltung eine erste Messung des Ohm'schen Widerstandes vor Erwärmung der Wicklung und wenigstens eine weitere Messung während oder nach der Erwärmung der Wicklung durchführt und daß eine Logik vorgesehen ist, die aufgrund eines Vergleichs der Meßwerte die Widerstandsänderung bzw. die Temperaturdifferenz errechnet.

## Claims

1. Device for detecting the winding temperature of a brushless DC motor by determining the winding resistance of at least one winding, characterized in that a measurement circuit is provided which, when the motor is running, determines the winding resistance during a time interval in which no current is flowing in the winding.

2. Device according to Claim 1, characterized in that a commutating electronics device of the motor is provided, which supplies the measurement circuit with a signal for determining the time interval in which the measurement is carried out.

3. Device according to Claim 1 or 2, characterized in that the measurement circuit for determining the winding resistance consists of a series tuned circuit, and in that the maximum value of the current amplitude at an excited resonant frequency represents a measure of the resistance of the winding.

4. Device according to Claim 3, characterized in that a frequency generator (2) is provided in order to generate the resonant frequency, which frequency generator (2) passes through a frequency range within which the resonant frequency is located during the time interval in which no current is flowing in the winding.

5. Device according to Claim 3 or 4, characterized in that at least one capacitor (3) is provided in order to form the series tuned circuit.

6. Device according to Claim 1 or 2, characterized in that a pulse generator (8) is provided as the measurement circuit, which pulse generator (8) applies at least one voltage pulse to the winding, the resulting current response representing a measure of the resistance of the winding.

7. Device according to Claim 1 or 2, characterized in that the measurement circuit carries out a first measurement of the resistance before heating of the winding and at least one further measurement during or after heating of the winding, and in that a logic device is provided which calculates the resistance change and the temperature difference on the basis of a comparison of the measurements.

## Revendications

1. Dispositif destiné à détecter la température du bobinage d'un moteur à courant continu sans balais, par détermination de la résistance ohmique d'au moins un enroulement, caractérisé en ce qu'il est prévu un circuit de mesure qui, lorsque le moteur tourne, détermine la résistance ohmique du bobinage pendant un intervalle de temps au cours duquel le bobinage se trouve hors tension.

2. Dispositif selon la revendication 1, caractérisé en ce qu'il est prévu un dispositif électronique de commutation du moteur, qui fournit au circuit de mesure un signal, afin de déterminer l'intervalle de temps pendant lequel la mesure est effectuée.

3. Dispositif selon les revendications 1 ou 2, caractérisé en ce que le circuit de mesure destiné à déterminer la résistance ohmique du bobinage est constitué d'un circuit oscillant en série et en ce que la valeur maximale de l'amplitude du courant, dans le cas d'une fréquence de résonance provoquée, constitue un critère de la résistance ohmique du bobinage.

4. Dispositif selon la revendication 3, caractérisé en ce que pour produire la fréquence de résonance, il est prévu un générateur de fréquence (2) qui, pendant l'intervalle de temps au cours duquel le bobinage est hors tension, traverse une gamme de fréquences à l'intérieur de laquelle se situe la fréquence de résonance.

5. Dispositif selon les revendications 3 ou 4, caractérisé en ce qu'il est prévu au moins un condensateur (3) pour former le circuit oscillant en série.

6. Dispositif selon les revendications 1 ou 2, caractérisé en ce qu'il est prévu comme circuit de mesure un générateur d'impulsions (8), qui envoie au bobinage au moins une impulsion de tension, le courant qui en résulte constituant un critère de la résistance ohmique du bobinage.

7. Dispositif selon les revendications 1 ou 2, caractérisé en ce que le circuit de mesure procède à une première mesure de la résistance ohmique, avant échauffement du bobinage et à au moins une autre mesure pendant ou après l'échauffement du bobinage et en ce qu'il est prévu un circuit logique qui calcule la variation de la résistance ou la différence de température, à partir d'une comparaison des valeurs mesurées.

Fig. 1

Fig. 2

Fig. 3

7

# Fig. 4

# Fig. 5